# EUROPÄISCHE PATENTSCHRIFT

(11) **EP 3 130 448 B1**
(45) Veröffentlichungstag und Bekanntmachung des Hinweises auf die Patenterteilung: **20.05.2020**
(21) Anmeldenummer: 16181462.9
(22) Anmeldetag: 27.07.2016
(51) Int. Cl.: B29C 65/22, B65B 31/02, B65B 51/14

(54) **SCHWEISSBALKEN FÜR VAKUUMSCHUBLADE SOWIE VAKUUMSCHUBLADE**
WELDING JAW FOR VACUUM DRAWER AND VACUUM DRAWER
BARRE DE SOUDAGE POUR TIROIR A VIDE ET TIROIR A VIDE

(30) Priorität: 11.08.2015 DE 102015010433
(43) Veröffentlichungstag der Anmeldung: 15.02.2017
(73) Patentinhaber: MICHATEK, k.s., 07101 Michalovce (SK)
(72) Erfinder: Bocks, Stefan, 83112 Frasdorf (DE); Harlander, Florian, 6342 Niederndorf (AT); Kopfensteiner, Peter, 6341 Ebbs (AT)
(74) Vertreter: Hofstetter, Schurack & Partner

(56) Entgegenhaltungen:
- WO-A1-96/11789
- JP-A- H0 939 920
- JP-A- H10 258 808
- US-A- 3 323 277
- US-B1- 6 789 371

## Beschreibung

Die Erfindung betrifft einen Schweißbalken für eine Vakuumschublade zum Vakuumieren von Lebensmitteln, mit einem Grundträger, der wenigstens einen in Längsrichtung auf der Oberfläche verlaufenden Schweißdraht umfasst. Ferner betrifft die Erfindung eine Vakuumschublade mit einem entsprechenden Schweißbalken.

Vakuumiergeräte umfassen eine Vakuumpumpe, in die ein geeignetes Behältnis, beispielsweise in Form eines versiegelbaren Beutels eingelegt wird. Innerhalb der Kammer erstreckt sich ein Schweißbalken, der in vertikaler Richtung höhenverstellbar ist. Das mit Lebensmitteln befüllte Behältnis wird in die Vakuumkammer eingelegt, diese im Anschluss über einen Deckel luftdicht verschlossen, um mittels einer Vakuumpumpe ein Kammervakuum zu erzeugen. Da der Schweißbalken zunächst in geöffneter Stellung positioniert ist, kann auch die Luft aus dem Behältnis abgesaugt werden. Im Anschluss wird der Schweißbalken höhenverstellt und der Beutel zwischen Schweißbalken und Gegenstelle eingeklemmt. Durch Zuführung der benötigten Schweißenergie wird der Beutel aufgrund der Wärmeentwicklung versiegelt.

Für den Schweißvorgang muss sichergestellt sein, dass der Schweißdraht gleichmäßig kontaktiert wird, da es ansonsten zu lokaler Überhitzung des Schweißdrahtes und entsprechender Beschädigung kommen kann. Da eine gleichmäßige Kontaktierung bei einer wärmebedingten Längung des Schweißdrahtes unter Umständen nicht gewährleistet werden kann, wurde bisher ein entsprechendes Federelement zur Kompensation der Längung integriert.

Die JP H09 39920 A offenbart ein Schweißgerät für eine Packmaschine. Das Schweißgerät ist dazu ausgebildet, eine Öffnung einer Verpackungstasche zu verschweißen und abzudichten.

Außerdem offenbart die WO 96/11789 A1 eine Schweißschiene für eine VakuumVerpackungsmaschine, mit einem länglichen Grundkörper und mit zumindest einer Bahn für die Anbringung eines Drahts an dieser Schiene. Der US 3 323 277 A ist eine Maschine zum Abdichten von Verpackungen durch Hitze als bekannt zu entnehmen.

Außerdem offenbart die US 6 789 371 B1 eine Abdichtschienenanordnung zur Verwendung in einer elektrischen Impulssiegelmaschine. Darüber hinaus ist aus der JP H10 258808 A eine Befestigungsstruktur eines Schweißdrahts für eine Vakuumverpackungsmaschine bekannt.

Der Gegenstand der vorliegenden Erfindung beschäftigt sich mit der Aufgabe, eine alternative Fixierung des Schweißdrahtes am Grundträger des Schweißbalkens aufzuzeigen.

Gelöst wird diese Aufgabe durch den Schweißbalken gemäß den Merkmalen des Anspruchs 1. Vorteilhafte Ausgestaltungen des Schweißbalkens sind Gegenstand der abhängigen Unteransprüche.

Erfindungsgemäß wird bei dem gattungsgemäßen Schweißbalken mit einem Grundträger, der wenigstens einen in Längsrichtung auf der Oberfläche verlaufenden Schweißdraht umfasst, vorgeschlagen, den Schweißdraht unter Vorspannung an dem Grundträger zu befestigen, so dass dieser über seine gesamte Länge auf dem Grundträger flächig aufliegt. Durch die Vorspannung, dass der Heizdraht überall flächig anliegt und die Wärme abgeführt werden kann. Andernfalls würde der Heizdraht an der Stelle ohne Wärmeabfuhr überhitzen.

Die Fixierung am Grundkörper erfolgt mittels Klemmmittel, besonders bevorzugt ist pro freiem Ende des Schweißdrahtes jeweils ein separates Klemmmittel vorgesehen. Der Schweißdraht selbst ist endseitig über eine klemmende Verbindung an dem Klemmmittel fixiert. Die Befestigung des Klemmmittels am Grundkörper erfolgt über eine lösbare Verbindung des Klemmmittels mit dem Grundträger.

Die Befestigung der ein oder mehreren Klemmmittel am Grundträger erfolgt über wenigstens einen Haken des Klemmmittels. Dieser kann am Grundträger eingehängt sein. Das Klemmmittel ist unterhalb der Oberfläche des Grundträgers fixiert und der Haken an der Querkante der Oberfläche des Grundträgers eingehängt.

Idealerweise ist der Heizdraht ein oder beidseitig über eine klemmende Verbindung mittelbar oder unmittelbar am Grundträger zu befestigt. Durch die klemmende Verbindung des Schweißdrahtes mit dem Grundträger, vorzugsweise durch Einklipsen der Enden des Schweißdrahtes in entsprechende Klemmen, kann der Schweißdraht flexibel unter einer gewissen Vorspannung auf dem Grundträger befestigt werden. Die Vorspannung sorgt dafür, dass auch bei wärmebedingter Längung des Schweißdrahtes eine gleichmäßige Kontaktierung zwischen Schweißdraht und Umgebung, d.h. Grundträger sichergestellt ist.

Bevorzugt ist der Schweißdraht über die Querkanten des Grundträgers auf die Unterseite geführt und auf der Unterseite mittels Klemmverbindung an dieser fixiert. Vorzugsweise umfasst der Grundträger endseitige Radien, um die der Schweißdraht flächig aufliegend verläuft.

Zudem kann vorgesehen sein, dass unterhalb der Oberfläche des Grundträgers an diesem ein oder mehrere Rasthaken vorgesehen sind, die in entsprechende Ausnehmungen des Klemmmittels einrasten und damit eine formschlüssige Verbindung zwischen Grundträger und Klemmmittel gestatten.

Ein besonderer Vorteil der Ausgestaltung mithilfe des Klemmmittels ist dabei, dass die Klemmmittel zur Erzielung einer Hebel- bzw. Keilwirkung eingesetzt werden können. Durch Einhaken der Klemmmittel und Verbringen dieser auf die Unterseite des Grundträgers, vorzugsweise durch eine Drehbewegung mit der Hakenverbindung als Drehachse, wird automatisch eine ausreichende Vorspannung des eingeklemmten Schweißdrahtes erzielt.

Bevorzugt bestehen die Klemmmittel aus einem elektrisch leitenden Material oder umfassen zumindest ein elektrisch leitendes Material, vorzugsweise ein leitfähiges Metall. Die Klemmmittel dienen in diesem Fall gleichzeitig als Anschlussstellen für die elektrische Versorgung des Schweißdrahtes. Vorstellbar ist eine entsprechende Öffnung auf der Unterseite der Klemmmittel, die sich bei der Montage des Schweißbalkens innerhalb einer Vakuumschublade auf entsprechende Anschlusszapfen stecken lassen.

Zur Bereitstellung der Klemmverbindung umfassen die Klemmmittel vorteilhafterweise eine Nut, in die der Schweißdraht durch ein Pressteil des Klemmmittels einpressbar ist. Das Pressteil selbst kann bewegbar, insbesondere verbiegbar, am Klemmmittel angeordnet sein.

Neben dem erfindungsgemäßen Schweißbalken betrifft die vorliegende Erfindung zudem eine Vakuumschublade, insbesondere für den Einbau in ein Möbelstück, mit einer Vakuumkammer und wenigstens einem in der Vakuumkammer gelagerten Schweißbalken gemäß der vorliegenden Erfindung. Die Vorteile und Eigenschaften der erfindungsgemäßen Vakuumschublade entsprechen damit denen des erfindungsgemäßen Schweißbalkens. Auf eine wiederholende Beschreibung wird aus diesem Grund verzichtet.

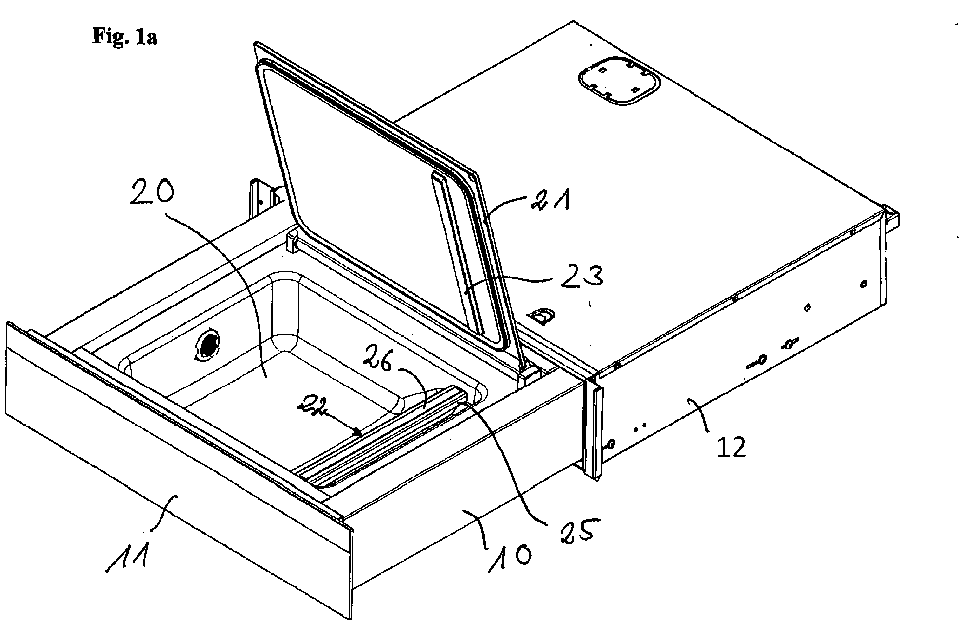

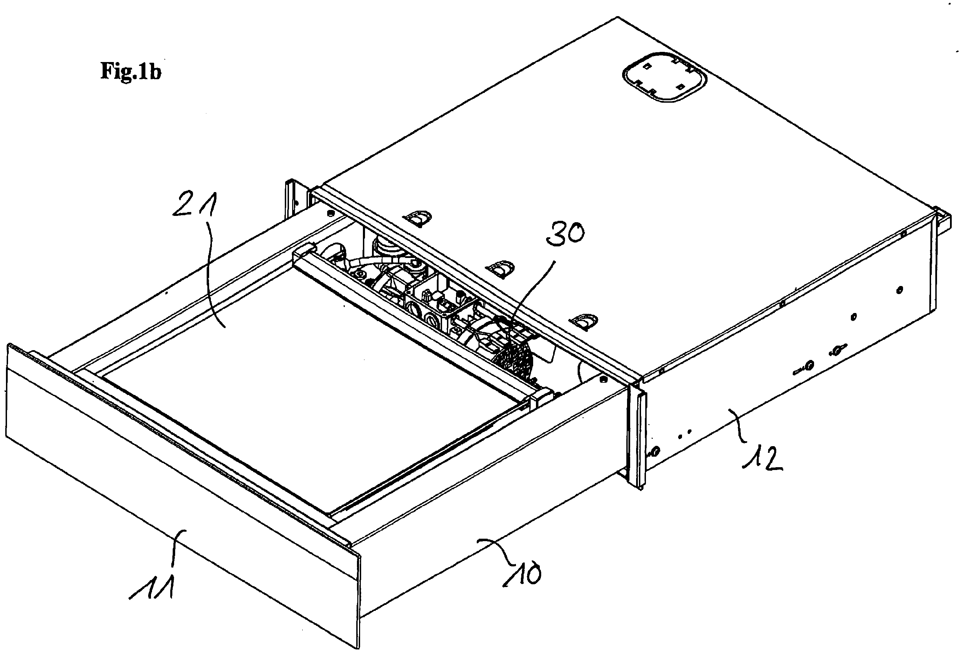

Weitere Vorteile und Eigenschaften der Erfindung sollen im Folgenden anhand eines in den Figuren dargestellten Ausführungsbeispiels näher erläutert werden. Es zeigen: Figuren 1a, 1b: zwei isometrische Darstellungen der erfindungsgemäße Vakuumschublade,
- Figur 2:: eine perspektivische Ansicht des Rahmenteils des erfindungsgemäßen Schweißbalkens,
- Figur 3:: das Rahmenteil gemäß Figur 2 in einer Explosionsdarstellung,
- Figur 4:: eine Schnittdarstellung des erfindungsgemäßen Schweißbalkens quer zu dessen Längsachse,
- Figur 5a:: eine Schnittdarstellung des Grundträgers entlang der Längsachse,
- Figur 5b:: eine Detailansicht der Darstellung gemäß Figur 5a und
- Figur 6:: eine Explosionsdarstellung des Grundträgers des Schweißbalkens.

Die zwei Figuren 1a, 1b zeigen isometrische Darstellungen der erfindungsgemäßen Vakuumschublade. Die Darstellung der Figur 1a zeigt die ausgefahrene Schublade für den regulären Vakuumierbetrieb. In Figur 1b ist die Schublade zu Wartungszwecken noch ein Stück weiter ausgefahren, um einen Blick auf die Vakuumpumpe 30 zu ermöglichen. Die Schublade eignet sich für den Einsatz in einem Küchenmöbel, da sie sich durch eine Einbauhöhe von ca. 140 mm auszeichnet und demnach dem Normmaß von Einbauküchen entspricht.

Die Vakuumschublade umfasst einen Schubladenauszug 10, der in einem Schubladenkorpus 12 über seitliche Führungsschienen längsverschieblich geführt ist. Im dargestellten Ausführungsbeispiel ist die Frontabdeckung 11 grifflos, der Schubladenauszug ist als Push-Pull-Einrichtung zum Öffnen und Schließen konstruiert. Innerhalb des Schubladenauszuges ist eine Vakuumkammer 20 gelagert, die mit einer Vakuumpumpe 30 der Vakuumschublade strömungstechnisch gekoppelt ist, um die Luft aus der verschlossenen Vakuumkammer 20 abzupumpen. Die Vakuumkammer 20 kann über den schwenkbar an der Kammer 20 montierten Deckel 21 luftdicht verschlossen werden. Der Deckel 21 selbst kann aus Designgründen aus Glas gefertigt sein.

Für das Versiegeln eines eingelegten Beutels dient ein Schweißbalken 22, der sich im Kammerinneren in Auszugsrichtung der Schublade erstreckt. Ein mit Lebensmitteln befüllter Beutel wird zum Vakuumieren in die Kammer 20 eingelegt und der Deckel 21 luftdicht verschlossen. Nach dem Auspumpen der Kammer 20 mittels der in Figur 1 b sichtbaren Vakuumpumpe 30 kann der Beutel mittels des Schweißbalkens 22 versiegelt werden. Dazu wird die zu versiegelnde Beutelöffnung auf dem Schweißbalken 22 abgelegt, der diesen nach dem Vakuumieren gegen eine Andruckstelle drückt und durch Hitzeeinwirkung versiegelt. Der Balken 22 kann entweder an einen am Deckel 21 befestigten Gegendruckbalken 23 oder gegen eine alternative Anpressfläche gepresst werden. Die Vakuumpumpe 30 sitzt hinter der Kammer 20 am hinteren Teil des Schubladenauszuges 10 und ist mit der Vakuumkammer 20 strömungstechnisch gekoppelt, um zur Vakuumerzeugung die Luft aus der Kammer 20 abzupumpen.

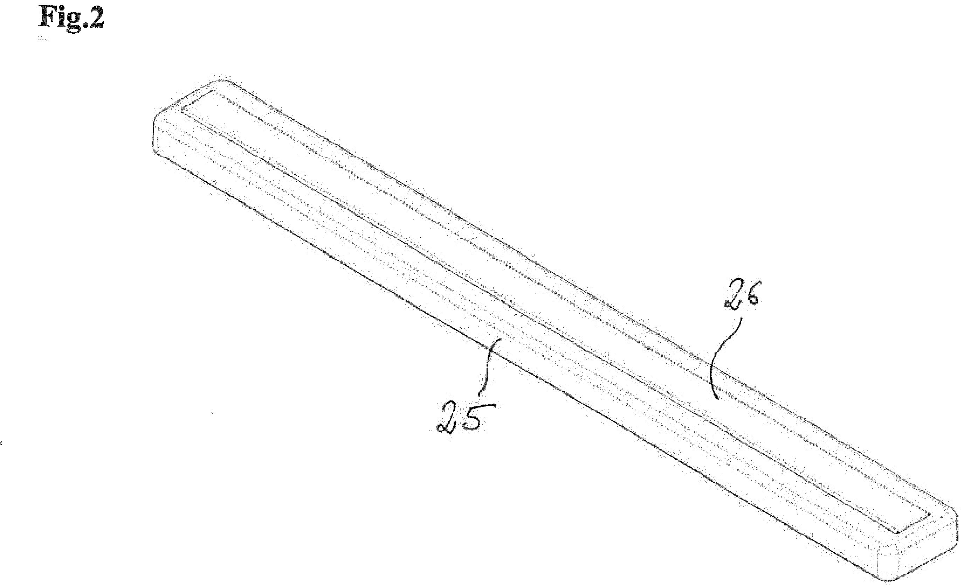

Der Schweißbalken 22 umfasst einen Grundkörper 40 sowie ein Rahmenteil 25, das mit einem Teflonband 26 ausgestattet ist. Beim Schweißvorgang kontaktiert der Schweißbalken 22 über das Teflonband 26 den eingelegten Beutel, die mit dem Schweißdraht 42 erzeugte Hitze wird über das Teflonband 26 an den Beutel abgegeben. Figur 2 zeigt eine perspektivische Darstellung des Rahmenteils 25 für den erfindungsgemäßen Schweißbalken 22. Das Rahmenteil 25 umfasst das Teflonband 26, das sich in Längsrichtung des Schweißbalkens 22 fast vollständig über dessen Oberfläche erstreckt.

Die zweiteilige Konstruktion des Schweißbalkens 22 bestehend aus dem Grundkörper 40 und dem Rahmenteil 25 erlaubt einen schnellen, einfachen und kostengünstigen Austausch des Teflonbandes 26. Es kann entweder das gesamte Rahmenteil 25 oder nur das Teflonband 26 getauscht werden.

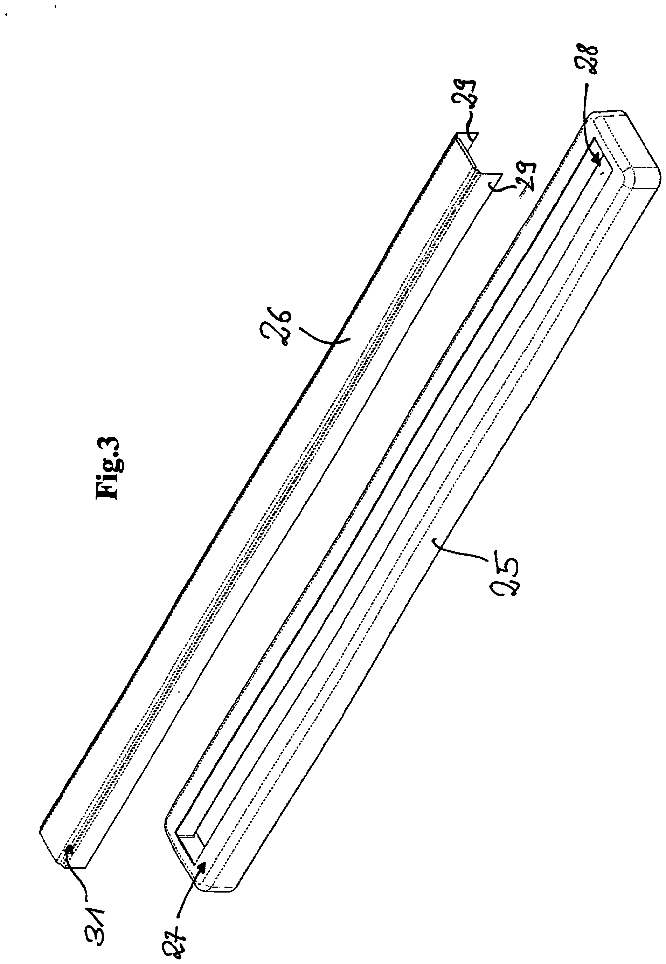

Die Explosionsdarstellung gemäß Figur 3 zeigt das vollständige Teflonband 26 sowie die Beschaffenheit der Oberfläche des Rahmenteils 25. Das Rahmenteil 25 umfasst auf seiner Oberfläche 27, auf die während des Schweißvorgangs ein entsprechend zu versiegelnder Beutel aufgelegt wird, eine Ausnehmung 28. Die Längskanten 29 des Teflonbandes 26 sind nach unten gefaltet, die resultierende Breite des Teflonbandes 26 entspricht damit in etwa der Öffnungsbreite der Ausnehmung 28. Dadurch lässt sich das Teflonband 26 in die Öffnung 28 einsetzen und es ergibt sich eine nahezu stufenlose Oberfläche 27 des Rahmens 25 mit einem äußert geringen Versatz am Übergang zwischen Rahmenteil 25 und Teflonband 26.

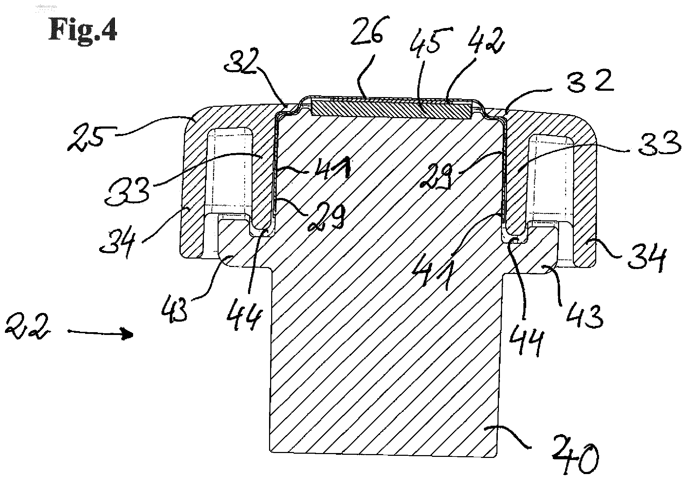

Die Faltkante 31 des Teflonbandes 26 ist jedoch keine einfache Kantung, sondern die Faltung bildet ein gebogenes stufenförmiges Profil 31. Der genaue Profilverlauf ist der Querschnittsdarstellung gemäß Figur 4 zu entnehmen. Durch die gewählte Profilform 31 kann sich das Teflonband 26 eng an die beiden Dichtlippen 32 des Rahmenteils 25 anlegen, die sich jeweils entlang der Längskanten der Öffnung 28 erstrecken. Die Dichtlippen 32 reduzieren den Versatz im Übergang zwischen Rahmenteil 25 und Teflonband 26, so dass die Gefahr zur Schmutzbildung am Übergang minimiert wird.

Der Figur 4 ist weiterhin zu entnehmen, dass das Rahmenteil 25 auf den Grundträger 40 des Schweißbalkens 22 von oben aufgesteckt wird. Im Bereich der Öffnungskanten der Öffnung 28 des Rahmenteils 25 ragt eine Innenwandung 33 nach innen bzw. nach unten in den Schweißbalken 22 hinein, wodurch eine Öffnungswandung gebildet wird. Diese Innenwand 33 verläuft parallel zur gegenüberliegenden Seitenwand 41 des Grundträgers 40. Die Innenwandung 33 verläuft zudem parallel zur jeweiligen Außenwand 34 des Rahmenteils 25. Zwischen Innenwand 33 und Außenwand 34 liegt ein Spalt.
Auf der Oberfläche 45 des Grundträgers 40 verläuft in Längsrichtung der Schweißdraht 42. Wird das Rahmenteil 25 von oben auf den Grundträger 40 aufgesetzt, dann liegt der Schweißdraht 42 unmittelbar unterhalb des Teflonbandes 26, wodurch sich eine optimale Wärmeübertragung ergibt. Das Teflonband 26 kann durch eine Klemmverbindung am Schweißbalken 22 fixiert sein. Hierzu sind die gefalteten Längskanten 29 zwischen der Seitenwandung 41 des Grundträgers 40 und der Innenwandung 33 des Rahmenteils 25 geklemmt. Ebenfalls erfolgt eine dichtende Klemmung im Bereich der Dichtlippen 32 mit der Oberfläche des Grundträgers 40. Das Teflonband 26 kann zudem mit dem Rahmenteil 25 zusätzlich verklebt sein oder anderweitig an diesem befestigt sein.

Beim Aufsetzen des Rahmenteils 25 auf den Grundträger 40 wird die Unterkante der Innenwandung 33 endseitig in die durch die Auskragung 43 gebildete Nut 44 des Grundträgers 40 eingeklickt.

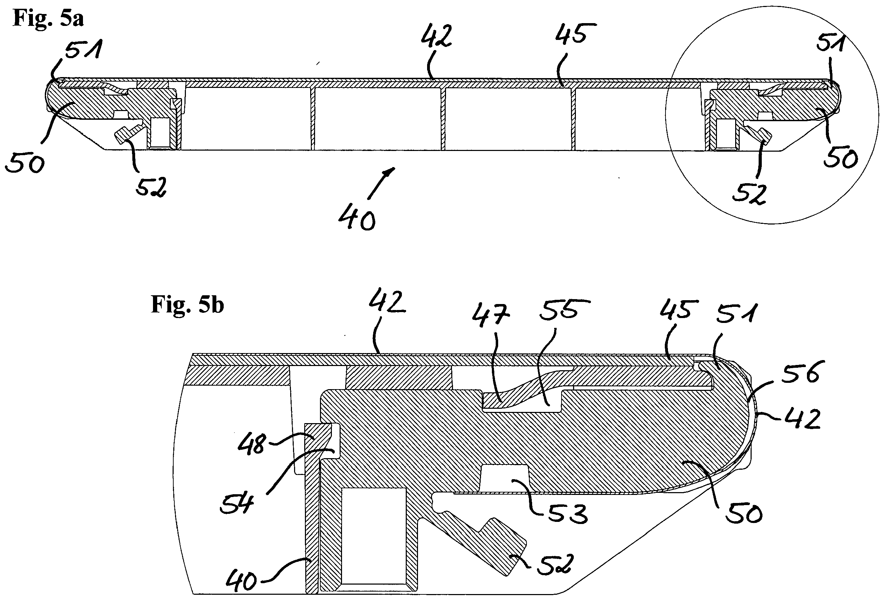

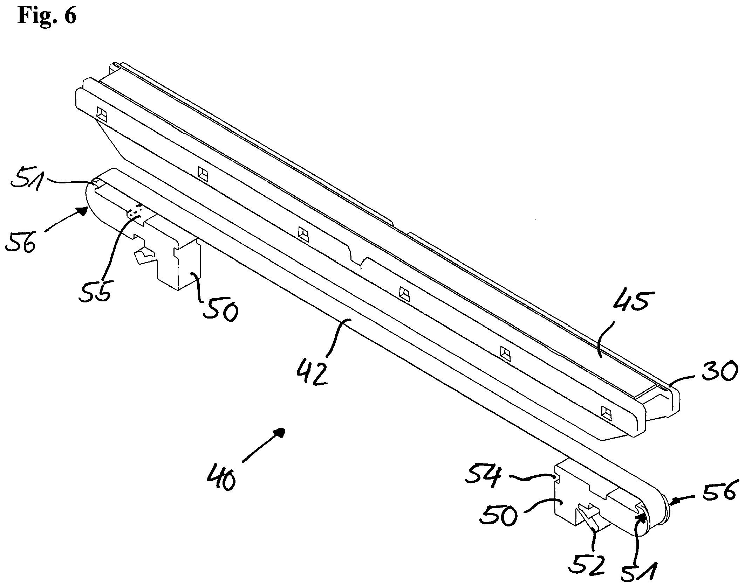

Die Befestigung des Schweißdrahtes 42 auf dem Grundträger 40 soll im Folgenden anhand der Figuren 5a, 5b und 6 näher erläutert werden. Figur 6 zeigt eine Explosionsdarstellung des Grundträgers 40, während Figur 5a einen Längsschnitt durch den Grundträger 40 zeigt. Figur 5b stellt einen Detailausschnitt der rechten Seite des Grundträgers 40 gemäß Figur 5a dar.

Der Schweißdraht 42 ist über die gesamte Oberfläche 45 des Grundträgers 40 in Längsrichtung gespannt, wobei die freien Schweißdrahtenden über die Endkanten des Grundträgers 40 auf dessen Unterseite geführt sind. Die Fixierung des Schweißdrahtes 42 am Grundträger 40 wird mit Klemmmitteln 50 erreicht. Diese sind aus einem elektrisch leitenden Material gefertigt und stellen gleichzeitig die Anschlussstellen des Schweißbalkens 22 für die elektrische Versorgung bereit.

Auf der Oberseite der Klemmmittel 50 befindet sich ein Haken 51, der durch die gerundete Endkante 56 des Klemmmittels 50 gebildet wird. An der Unterseite des Klemmmittels 50 befindet sich eine Nut 53 sowie ein biegsam am Klemmmittel befestigter Pflock 52, der passgenau in die Nut 53 eingepresst werden kann. An der Oberseite des Klemmmittels 50 befindet sich eine Ausnehmung 55, eine weitere Ausnehmung 54 existiert an der Rückseite des Klemmmittels 50. Die freien Enden des Schweißdrahtes 42 werden über jeweils eine gerundete Endseite 56 der Klemmmittel 50 von der Oberseite nach unten über die Nut 53 gelegt und durch Eindrücken des Pflockes 52 in die Nut 53 klemmend am Klemmmittel 50 fixiert.

Im Anschluss können die beiden Klemmmittel über die Haken 51 endseitig am Grundträger 40 eingehängt werden. Bevorzugt werden die Haken von oben am Grundträger eingehängt und im Anschluss durch eine Drehbewegung nach innen unter die Unterseite des Grundträgers gedrückt. Durch die damit verbundene Hebelwirkung kommt es zu einer ausreichenden Spannung des Schweißdrahtes, so dass dieser gleichmäßig und eben auf der Oberseite 45 des Grundträgers 40 verläuft. Die Vorspannung ist so gewählt, dass auch bei einer wärmebedingten Längung des Schweißdrahtes 42 eine gleichmäßige Kontaktierung stattfindet. In dieser Position werden die Klemmmittel 50 zudem über die Ausnehmungen 54, 55 an den entsprechenden Rasthaken 47, 48 des Grundträgers 40 verrastet. Erwähnenswert ist noch, dass sich die Klemmmittel 50 in der fixierten Lage geschützt in einem Hohlraum der Klemmkörper 50 befinden.

## Patentansprüche

1. Schweißbalken (22) für eine Vakuumschublade zum Vakuumieren von Lebensmitteln, mit einem Grundträger (40), der wenigstens einen in Längsrichtung auf der Oberfläche verlaufenden Schweißdraht (42) umfasst, wobei der Schweißdraht (42) unter Vorspannung am Grundträger (40) befestigt ist und über seine gesamte Länge am Grundträger (40) flächig anliegt, und wobei der Schweißdraht (42) endseitig durch wenigstens ein Klemmmittel (50) aufgenommen ist, das oder die lösbar mit dem Grundträger (40) verbindbar bzw. verbunden sind,
**dadurch gekennzeichnet, dass**
das oder die Klemmmittel (50) über einen Haken (51) am Grundträger (40) einhängbar bzw. eingehängt sind, wobei die Klemmmittel (50) auf der Unterseite unterhalb der Oberfläche des Grundträgers (40) fixiert und die Haken (51) an der Querkante der Oberfläche des Grundträgers (40) eingehängt sind.

2. Schweißbalken (22) nach Anspruch 1,
**dadurch gekennzeichnet, dass**
der Schweißdraht (42) über die Querkanten des Grundträgers (40) auf die Unterseite geführt und auf der Unterseite mittels Klemmverbindung fixiert ist, insbesondere ist der Schweißdraht (42) über wenigstens einen endseitigen Radius des Grundträgers (40) flächig anliegend geführt.

3. Schweißbalken (22) nach einem der vorhergehenden Ansprüche,
**dadurch gekennzeichnet, dass**
das oder die Klemmmittel (50) an der Unterseite unterhalb der Oberfläche des Grundträgers (40) mittels ein oder mehrerer Rasthaken (47, 48) des Grundträgers (40) an diesem fixiert oder fixierbar sind.

4. Schweißbalken (22) nach einem der vorhergehenden Ansprüche,
**dadurch gekennzeichnet, dass**
die Klemmmittel (50) aus einem elektrisch leitenden Material bestehen oder dieses umfassen, vorzugsweise Metall.

5. Schweißbalken (22) nach einem der vorhergehenden Ansprüche,
**dadurch gekennzeichnet, dass**
die Klemmmittel (50) eine Nut umfassen, in die der Schweißdraht (42) durch ein Pressteil des Klemmmittels (50) eingepresst ist.

6. Vakuumschublade, insbesondere für den Einbau in ein Möbelstück geeignet, mit einer Vakuumkammer und wenigstens einem in der Vakuumkammer gelagerten Schweißbalken (22) gemäß einem der vorhergehenden Ansprüche:

## Claims

1. A welding bar (22) for a vacuum drawer for evacuating food, comprising a base support (40) including at least one welding wire (42) extending in longitudinal direction on the surface, wherein the welding wire (42) is attached to the base support (40) under prestress and extensively abuts on the base support (40) over its entire length, and wherein the welding wire (42) is received by at least one clamping means (50) on the end side, which is or are detachably connectable or connected to the base support (40),
**characterized in that**
the clamping means (50) can be or are hooked into the base support (40) via a hook (51), wherein the clamping means (50) are fixed on the bottom side below the surface of the base support (40) and the hooks (51) are hooked on the transverse edge of the surface of the base support (40).

2. The welding bar (22) according to claim 1,
**characterized in that**
the welding wire (42) is guided to the bottom side over the transverse edges of the base support (40) and fixed on the bottom side by means of clamping connection, in particular the welding wire (42) is guided extensively abutting over at least one end-side radius of the base support (40).

3. The welding bar (22) according to any one of the preceding claims,
**characterized in that**
the clamping means (50) is or are fixed or fixable to the base support (40) on the bottom side below the surface of the base support (40) by means of one or more locking hooks (47, 48) of the base support (40).

4. The welding bar (22) according to any one of the preceding claims,
**characterized in that**
the clamping means (50) are composed of or include an electrically conductive material, preferably metal.

5. The welding bar (22) according to any one of the preceding claims,
**characterized in that**
the clamping means (50) include a groove, into which the welding wire (42) is pressed by a pressing part of the clamping means (50).

6. A vacuum drawer, in particular suitable for the installation in an item of furniture, comprising a vacuum chamber and at least one welding bar (22) stored in the vacuum chamber according to any one of the preceding claims.

## Revendications

1. Barre de soudage (22) pour un tiroir à vide pour mettre sous vide des produits alimentaires, comprenant un support de base (40) qui comprend au moins un cordon de soudure (42) s'étendant dans la direction longitudinale sur la surface, le cordon de soudure (42) étant fixé avec précontrainte sur le support de base (40) et s'appliquant à plat sur toute sa longueur sur le support de base (40) et le cordon de soudure (42) étant reçu du côté d'extrémité par au moins un moyen de serrage (50) qui peu(ven)t être ou qui est (sont) connecté(s) de manière amovible au support de base (40),
**caractérisée en ce que**
le ou les moyens de serrage (50) peu(ven)t être ou est(sont) accroché(s) par le biais d'un crochet (51) au support de base (40), les moyens de serrage (50) étant fixés sur le côté inférieur en dessous de la surface du support de base (40) et les crochets (51) étant accrochés au niveau de l'arête transversale de la surface du support de base (40).

2. Barre de soudage (22) selon la revendication 1,
**caractérisée en ce que**
le cordon de soudure (42) est guidé sur le côté inférieur par le biais des arêtes transversales du support de base (40) et est fixé sur le côté inférieur au moyen d'une connexion par serrage, en particulier le cordon de soudure (42) est guidé de manière à s'appliquer à plat sur au moins un rayon du côté de l'extrémité du support de base (40).

3. Barre de soudage (22) selon l'une quelconque des revendications précédentes,
**caractérisée en ce que**
le ou les moyens de serrage (50) peu(ven)t être ou est(sont) fixé(s) au niveau du côté inférieur en dessous de la surface du support de base (40) au moyen d'un ou plusieurs crochets d'encliquetage (47, 48) du support de base (40) à ce dernier.

4. Barre de soudage (22) selon l'une quelconque des revendications précédentes,
**caractérisée en ce que**
les moyens de serrage (50) se composent d'un matériau électriquement conducteur, de préférence du métal, ou comprennent celui-ci.

5. Barre de soudage (22) selon l'une quelconque des revendications précédentes,
**caractérisée en ce que**
les moyens de serrage (50) comprennent une rainure dans laquelle le cordon de soudure (42) est pressé par une partie de pressage du moyen de serrage (50).

6. Tiroir à vide, en particulier approprié pour l'insertion dans un meuble, comprenant une chambre à vide et au moins une barre de soudage (22) selon l'une quelconque des revendications précédentes supportée dans la chambre à vide.
